# DEMANDE DE BREVET EUROPEEN

(11) **EP 1 918 822 A1**
(43) Date de publication de la demande: **07.05.2008**
(21) Numéro de dépôt: 06291713.3
(22) Date de dépôt: 31.10.2006
(51) Int. Cl.: G06F 12/02

(54) **Système et procédé d'indexation de mémoire**

(71) Demandeur: Axalto S.A., 92190 Meudon (FR)
(72) Inventeur: Castillo, Laurent c/o Axalto S.A., 92190 Meudon (FR)
(74) Mandataire: Cour, Pierre

(57) **Abrégé**

L'invention concerne un système de gestion d'un index de mémoire. Ledit système comporte une mémoire de stockage indexée, une zone mémoire qui contient l'index, et un microprocesseur. L'index est construit sous la forme d'une structure hiérarchique en arborescence, et il comporte au moins deux noeuds. Un noeud contient un identifiant associé à un pointeur référençant soit un noeud de l'index, soit une zone mémoire dans la mémoire de stockage. Un noeud a son contenu réparti sur un premier et un second espaces mémoires disjoints dans la zone de mémoire. Le premier espace a un premier pointeur spécifique qui pointe sur le second espace et le second espace a un second pointeur spécifique dont la valeur est à l'état vierge.

## Description

La présente invention se rapporte aux systèmes et aux procédés d'indexation de mémoire. Plus précisément, l'invention concerne les systèmes et procédés d'indexation de mémoire non volatile telle que les mémoires Flash utilisant une structure hiérarchique en arborescence.

Dans une mémoire flash, les octets sont gérés par groupes d'octets, appelé pages. Une page est constituée d'un ensemble d'octets dont les adresses sont physiquement consécutives. Toutes les pages ont la même taille. Les pages sont regroupés en bloc de pages qui ont tous la même taille. Les mémoires flash ont pour caractéristique notable de ne pouvoir être effacées que par page entière ou par bloc de pages entier. Elles peuvent être lues et écrites avec une granularité inférieure à la page, par exemple de l'ordre de l'octet ou du bit. Selon les mémoires, la taille des pages varie de quelques octets à plusieurs centaines d'octets. Les opérations d'effacement d'un bloc sont généralement coûteuses en terme de temps et de consommation. En outre, la plupart des mémoires flash ne supportent qu'un nombre maximum de cycles d'effacement des blocs. En début de cycle de vie, le contenu d'une telle mémoire est à l'état vierge, c'est-à-dire que l'ensemble des octets est initialisé à une valeur unique par défaut. Généralement cet état vierge correspond à la plus petite ou à la plus grande valeur que peut prendre un octet (00h ou FFh).

Afin de tenir compte des contraintes issues du cycle de vie de la mémoire et d'améliorer les performances lors de l'accès en écriture à la mémoire, il est connu d'utiliser le principe de journalisation. Un système journalisé change constamment de zone physique dans la mémoire à chaque fois qu'une donnée doit être écrite. Ce principe évite d'avoir à effacer une page avant de pouvoir écrire pardessus lorsque la donnée est de taille inférieure à la page. Avec un système journalisé, il est nécessaire d'assurer continuellement une indexation entre les zones physiques et les données logiques.

Un arbre équilibré, ou de type B (Balanced Tree en anglais), est une structure dynamique de données qui peut se représenter sous la forme d'une hiérarchie dont chaque élément est appelé noeud. Cette structure de données est dynamique car sa taille peut évoluer en fonction des besoins. Chaque noeud contient des données, une liste ordonnée de k identifiants et une liste de pointeurs vers des noeuds. Un noeud est appelé père des noeuds dont il contient les pointeurs d'adresse. Un noeud dont l'adresse est contenue dans un noeud père est appelé fils. Le noeud qui n'a pas de père est appelé racine. Les identifiants contenu dans un noeud ont un rôle de clés d'accès aux données propre à ce noeud et aux données contenues dans ses noeuds fils. Un pointeur est une donnée qui contient l'adresse physique d'un espace mémoire.

Un arbre est dit d'ordre d lorsque le nombre k de clés des noeuds est compris entre d-1 et 2d-1, excepté pour le noeud racine qui possède un nombre k de clés compris entre 1 et 2d-1.

Un noeud qui n'a aucun fils est appelé feuille. Un noeud qui a au moins un fils est appelé noeud interne. Un noeud peut contenir des données, des clés et des pointeurs sur des adresses physiques en mémoire.

Un arbre de type dit B+ se distingue par les caractéristiques suivantes :
- les données sont stockées uniquement dans les noeuds de type feuille,
- Un noeud interne possède k clés et au plus k+1 fils,
- Les clés contenues dans le ième fils ont des valeurs comprises entre les valeurs des (i-1)ème et ième clés du noeud père

Chaque noeud est enregistré dans une zone mémoire qui est constituée d'un groupe d'octets physiquement consécutifs. Les zones mémoires sont caractérisées par leur adresse de début et leur taille mémoire.

Dans un arbre, l'adresse d'un noeud est stockée dans son noeud père sous la forme d'un pointeur d'adresse. Ce pointeur permet de parcourir l'arbre lors de la recherche d'une donnée.

Il est connu d'utiliser des arbres B et notamment des arbres B+ pour gérer l'indexation des mémoires non volatiles, notamment de type Flash. « An Efficient B-Tree Layer for Flash-Memory Storage Systems", émit par National Taiwan University, propose l'utilisation d'arbres B+ pour gérer l'indexation de telles mémoires.

Un problème est que chaque fois que le contenu d'un noeud est modifié, l'adresse de ce noeud est systématiquement changée. Ce changement nécessite un effacement du noeud père qui sollicite la partie de la mémoire contenant l'indexation. La modification d'un noeud entraîne un changement qui se propage de père en père jusqu'à la racine.

L'invention vise à résoudre le problème précité. L'objectif de l'invention est de minimiser le nombre de changements d'adresse d'un noeud dont le contenu évolue afin d'éviter que l'adresse d'un noeud soit systématiquement changée dans le noeud père lorsque le contenu d'un noeud est modifié.

Contrairement à un arbre B classique, l'invention propose de stocker le contenu de chaque noeud de l'arbre à travers plusieurs espaces mémoires. Ces espaces sont alloués successivement au fur et à mesure des besoins.

L'invention est un système de gestion d'un index de mémoire. Ledit système comporte une mémoire de stockage indexée, une zone mémoire qui contient l'index et un microprocesseur. L'index est construit sous la forme d'une structure hiérarchique en arborescence, et comporte au moins deux noeuds. Au moins un noeud contient au moins un identifiant et au moins un pointeur référençant soit un noeud de l'index, soit une zone mémoire dans la mémoire de stockage. Au moins un noeud a son contenu réparti sur un premier et un second espaces mémoires, disjoints dans la zone de mémoire, le premier espace ayant un premier pointeur spécifique qui pointe sur le second espace et le second espace ayant un second pointeur spécifique dont la valeur est à l'état vierge.

Avantageusement, le second pointeur spécifique peut être destiné à pointer sur une troisième espace mémoire. Le système peut être un système journalisé. La mémoire de stockage indexée et la zone mémoire qui contient l'index peuvent être réunies dans un unique circuit de mémoire. La zone mémoire qui contient l'index peut être située dans une mémoire distincte de la mémoire de stockage indexée.
En variante, la zone mémoire qui contient l'index et la mémoire de stockage indexée peuvent être situées dans la même puce électronique ou bien être situées sur des puces électroniques distinctes.
De préférence, la zone mémoire qui contient l'index et la mémoire de stockage indexée sont de nature non volatile.

Selon un autre aspect l'invention est un procédé de gestion d'un index de mémoire. Ledit système comporte une mémoire de stockage indexée, une zone mémoire qui contient l'index et un microprocesseur. L'index est construit sous la forme d'une structure hiérarchique en arborescence et comportant au moins deux noeuds. Au moins un noeud contient au moins un identifiant et au moins un pointeur référence soit un noeud, soit une zone mémoire dans la mémoire de stockage. Au moins un noeud a son contenu réparti sur un premier et un second espaces mémoires, disjoints dans la zone de mémoire contenant l'index. Le premier espace a un premier pointeur spécifique qui pointe sur le second espace et le second espace a un second pointeur spécifique. Les espaces mémoire propres à un noeud forment une chaîne séquentielle d'espaces. Ladite chaîne possède un espace mémoire initial à une première extrémité et un espace mémoire terminal à une seconde extrémité. Chaque espace dispose d'un pointeur spécifique. L'espace terminal contient un pointeur spécifique à l'état vierge. Ladite chaîne séquentielle d'espaces est modifiée au fur et à mesure des mises à jour dudit noeud par positionnement du pointeur spécifique vierge sur l'adresse d'un nouvel espace, le nouvel espace devenant l'espace terminal.

Avantageusement, la modification d'un noeud comprend l'allocation d'un nouvel espace mémoire terminal distinct dans la chaîne séquentielle d'espaces mémoire propre au noeud, l'écriture de données dans le nouvel espace mémoire terminal et l'écriture, dans le précédent espace mémoire terminal du pointeur vers le nouvel espace mémoire terminal.

Préférentiellement, l'étape d'écriture d'information de chaînage vers le nouvel espace mémoire terminal peut être réalisée dans le pointeur spécifique du précédent espace mémoire terminal. Le contenu d'un noeud peut être reconstruit sur la base du contenu de l'espace mémoire initial correspondant audit noeud auquel sont appliquées successivement, dans l'ordre du chaînage, les modifications stockées dans les espaces mémoires chaînés propres au noeud. Les modifications appliquées au contenu de l'espace mémoire initial peuvent comprendre des opérations de substitution et/ou de suppression et/ou d'addition. Le contenu d'un noeud peut être reconstruit sur la base du contenu de l'espace mémoire initial correspondant audit noeud auquel sont appliquées, les modifications stockées dans l'espace mémoire terminal de la chaîne d'espaces mémoire propre au noeud.

Avantageusement, la compression d'un noeud peut se faire selon les étapes suivantes, étant supposé au préalable qu'un pointeur d'adresse sur ledit noeud est stocké dans un noeud père. Le contenu du noeud est alors d'abord reconstruit à partir de la chaîne d'espaces mémoires propre audit noeud, puis le contenu dudit noeud est stocké dans un nouvel espace mémoire initial, et enfin le noeud père est modifié en modifiant le pointeur sur ledit noeud afin qu'il pointe sur l'adresse du nouvel espace mémoire initial dudit noeud.

Préférentiellement, la compression du noeud peut être déclenchée dès que le nombre d'espaces mémoires de la chaîne d'espaces mémoires dudit noeud atteint un seuil prédéterminé. La compression du noeud peut être déclenchée dès que la somme des tailles des espaces mémoires de la chaîne dudit noeud atteint un seuil prédéterminé. La compression du noeud peut aussi être déclenchée dès qu'au moins un espace mémoire appartenant à la chaîne dudit noeud est situé dans une page mémoire qui a été identifiée comme devant être effacée.

D'autres particularités et avantages de l'invention apparaîtront clairement à la lecture de la description faite à titre d'exemple non limitatif et en regard des figures suivantes dans lesquelles :
- la figure 1 illustre un système carte à puce comportant une mémoire de stockage indexée, une zone mémoire qui contient un index et un microprocesseur;
- la figure 2 illustre un exemple de réalisation de l'invention dans un arbre B+,
- le figure 3 illustre la modification d'un noeud et la compression d'un noeud selon l'invention.

L'invention peut s'appliquer à tout type de système d'indexation de mémoire. Notamment elle peut s'appliquer pour des appareils numériques réunissant un processeur et des mémoires, portatifs ou non, tel qu'un ordinateur portatif, un appareil photo, un baladeur mais aussi une carte à puce. Toutefois un avantage important de l'invention est de réduire le nombre d'effacements et donc de limiter la consommation des mémoires flash, ce qui est particulièrement intéressant pour les appareils portables.
Un autre avantage de l'invention est de réduire le temps de mise à jour des informations en mémoire flash.

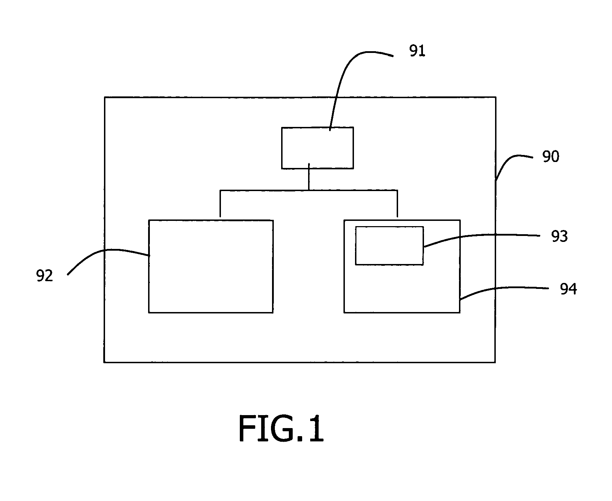

Selon un mode de réalisation préféré, le système de gestion d'index est réalisé dans une carte à puce 90 telle que représentée à la figure 1. La carte à puce 90 contient un microprocesseur 91, une première mémoire de stockage indexée 92 reliée au microprocesseur et une seconde mémoire 94 qui contient l'index 93 de la première mémoire de stockage indexée 92. La seconde mémoire 94 est également reliée au microprocesseur. L'index 93 est réalisé sous la forme d'un arbre B+. La première mémoire 92 et la deuxième mémoire 94 sont préférentiellement de type Flash réalisée dans une même mémoire partitionnée en deux zones de mémoires distinctes. Le système est mis en oeuvre par le microprocesseur 91. La première mémoire 94 contenant l'index 93 est gérée suivant un principe connu de journalisation.

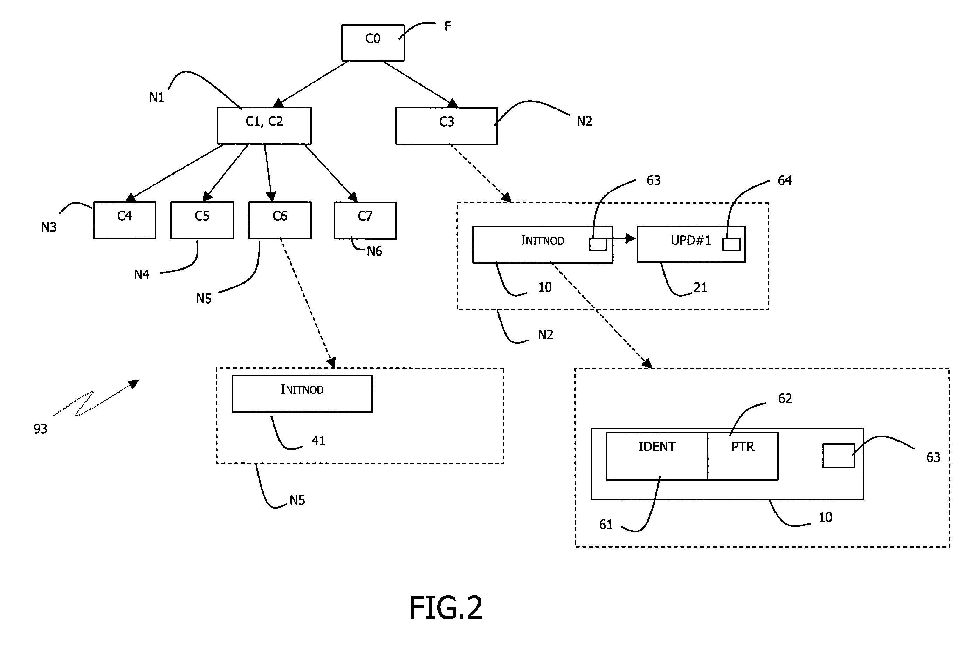

L'index 93 est constitué par un arbre B+ représenté sur la figure 2. Un noeud F pointe sur deux noeuds fils N1 et N2. Le noeud N1 pointe sur quatre noeuds fils N3, N4, N5 et N6. Les noeuds N2, N3, N4, N5, et N6 sont appelés des feuilles car ces noeuds N2 à N6 sont situés à des extrémités et ne pointent sur aucun noeud. Les feuilles de l'arbre B+ contiennent les pointeurs sur les zones allouées dans la première mémoire 92.

La figure 2 montre un premier niveau de zoom sur les noeuds N2 et N5. Le contenu du noeud N2 est réparti dans deux espaces mémoires distincts 10 et 21 appartenant à la deuxième mémoire 94. Ces deux espaces forment une chaîne séquentielle d'espaces mémoires.

La figure 2 montre également un deuxième niveau de zoom sur l'espace mémoire initial 10 du noeud N2. Chaque espace mémoire 10, qui est alloué pour stocker le contenu d'un noeud, possède au moins un identifiant 61, un pointeur 62 sur une zone de la première mémoire 92 et pointeur spécifique 63 pour enregistrer un lien référençant un autre espace mémoire de la chaîne. Le pointeur spécifique 63 reste vierge lorsque l'espace mémoire est alloué. Le pointeur spécifique 63 est, par la suite, mis à jour avec l'adresse d'un autre espace mémoire lorsqu'un nouvel espace mémoire est alloué lors d'une modification ultérieure du contenu du noeud. Cette écriture d'une zone vierge est possible avec une mémoire flash sans nécessiter un effacement et une réécriture complète du contenu de l'espace mémoire contenant cette zone. Un autre avantage de l'invention est donc de réduire le stress des cellules mémoire et d'allonger la durée de vie de la zone mémoire contenant l'index.

Le contenu du noeud N5 est stocké dans un espace mémoire 41 appartenant à la zone mémoire 94. La chaîne séquentielle d'espace mémoire du noeud N5 se réduit au seul espace mémoire 41.

Lorsqu'une nouvelle donnée est enregistrée dans la mémoire indexée 92, l'index 93 est mis à jour afin de référencer le nouvel espace mémoire qui a été alloué pour contenir cette nouvelle donnée. Dans ce cas l'index 93 doit être modifié et un nouvel identifiant associé à ce nouvel espace mémoire est ajouté dans un noeud N2.
Les noeuds peuvent être stockés dans des espaces mémoires de même taille ou de différentes tailles variable.
Les valeurs des pointeurs sur les noeuds de l'arbre peuvent être exprimées en adresse absolue ou relative.

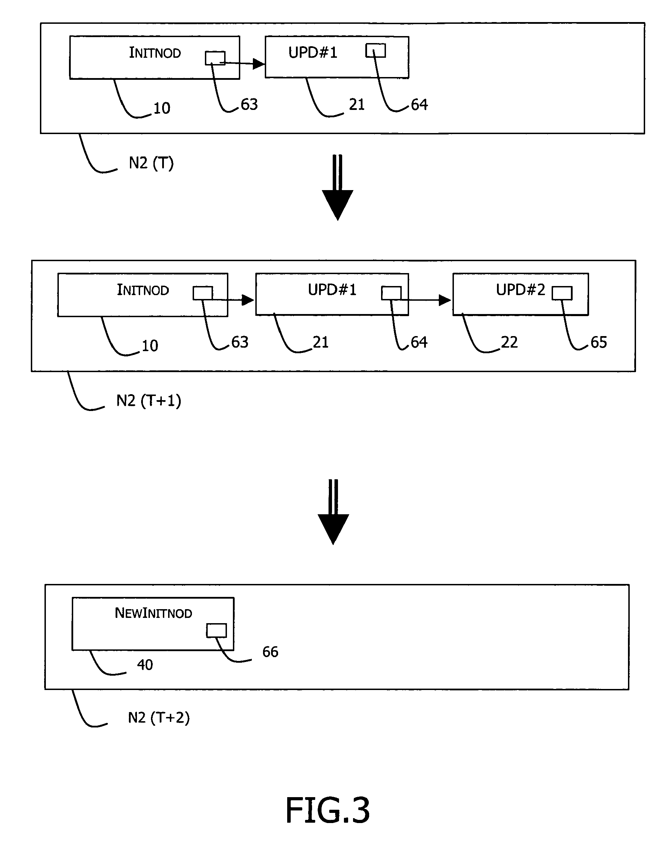

Un noeud N2, évoluant dans le temps, est représenté sous plusieurs formes sur la figure 3. Dans une première forme N2(T), le contenu du noeud N2 est réparti dans deux espaces mémoires 10 et 21. L'espace mémoire initial 10 contient un pointeur spécifique 63 qui pointe sur l'adresse de l'espace mémoire terminal 21. L'espace mémoire terminal 21 contient un pointeur spécifique 64 qui est à l'état vierge.

Lorsqu'un nouvel identifiant sur une zone de la mémoire 92 indexée doit être ajouté dans le noeud N2, le contenu du noeud N2 doit être modifié et il devient le noeud N2(T+1). Un nouvel espace mémoire 22 est alors alloué dans la deuxième mémoire 94. Le nouvel espace mémoire 22 est destiné à stocker les modifications du contenu du noeud N2. Le pointeur spécifique 64 de l'espace mémoire terminal 21 est mis à jour avec un lien référençant le nouvel espace mémoire 22. Le nouvel espace mémoire 22 devient l'espace mémoire terminal de la chaîne d'espaces mémoires associée au noeud N2. L'espace mémoire initial 10 du noeud N2 reste donc inchangé en mémoire et il est possible d'accéder au noeud N2 via une adresse inchangée. Une chaîne d'espaces mémoires est progressivement constituée de la sorte. Lors d'une modification ultérieure du contenu du même noeud N2, le même mécanisme peut être répété et c'est l'espace mémoire terminal de la chaîne qui est mis à jour avec le lien sur le nouvel espace mémoire. Chaque modification d'un noeud est stockée dans un nouvel espace mémoire qui est chaîné aux précédents espaces mémoires liés au noeud.
Le noeud N2 peut être également modifié lorsqu'une zone de la première mémoire 92 est libérée. L'identifiant correspondant à cette zone doit alors être supprimée du contenu du noeud N2. Il est alors ajouté un espace mémoire au noeud qui indique que cet identifiant n'est plus utilisé.
Le noeud N2 peut être également modifié lorsqu'une zone de la mémoire 92 est déplacée. Le pointeur correspondant à l'identifiant de la zone déplacée doit alors être modifié dans le contenu du noeud N2. L'identifiant est par exemple réécrit dans un nouvel espace mémoire avec la nouvelle adresse.
Le contenu du noeud est reconstruit sur la base du contenu de l'espace mémoire initial 10 auquel sont appliquées successivement, dans l'ordre du chaînage, les modifications stockées dans les espaces mémoires 21 et 22, chaînés séquentiellement. Le contenu de l'espace mémoire initial 10 est modifié en fonction du contenu du deuxième espace mémoire 21. Puis le résultat obtenu est modifié en fonction du contenu du troisième espace mémoire 22.
Lorsque le nombre d'espaces mémoires 10, 21 et 22 appartenant à la chaîne séquentielle associé au noeud N2 atteint un seuil prédéfini - par exemple trois - une compression de la chaîne séquentielle peut être déclenchée. La totalité de la chaîne séquentielle d'espaces mémoires associée au noeud N2 est par exemple remplacée par un nouvel espace mémoire initial 40 qui stocke le contenu du noeud N2 sous la forme N2(T+1). Le nouvel espace mémoire initial 40 possède un pointeur spécifique 66 qui est à l'état vierge. Cette opération offre l'avantage de libérer de l'espace mémoire dans la deuxième mémoire 94 et d'améliorer les performances lors de la recherche d'une donnée dans l'arbre d'index 93. Afin de recopier le contenu du noeud N2 dans un nouvel espace mémoire initial 40, le contenu du noeud N2 est d'abord reconstitué à partir de la chaîne séquentielle existante comme précédemment indiqué. Une fois le contenu du noeud reconstruit, le contenu est écrit dans un nouvel espace mémoire initial 40 associé au noeud N2. L'opération de compression du noeud N2 se termine par la mise à jour du noeud F qui pointe sur le noeud N2. Le contenu du noeud F est modifié en remplaçant le pointeur sur l'adresse de l'espace mémoire initial 10 du noeud N2 par un pointeur sur l'adresse du nouvel espace mémoire initial 40 du noeud N2. La mise à jour du noeud F est alors réalisée selon le même principe que le principe utilisé pour la mise à jour du noeud N2.
L'exemple préféré qui vient d'être décrit peut être réalisé de manière différente. Entre autre, d'autres variantes de réalisation sont indiquées ci-après.
En variante, le contenu du noeud N2 peut être reconstruit sur la base du contenu de l'espace mémoire initial 10 auquel sont appliquées les modifications stockées dans l'espace mémoire terminal 21. Le contenu de l'espace mémoire initial 10 est alors modifié en fonction du contenu du deuxième espace mémoire 21.
Une compression de la chaîne séquentielle contenant le noeud N2 peut est déclenchée lorsque la somme des tailles des espaces mémoires 10, 21 et 22 atteint un seuil prédéterminé.
Lorsqu'une page de la mémoire 94 doit être effacée, une compression de la chaîne séquentielle contenant le noeud N2 peut être déclenchée si un des espaces mémoires 10, 21 ou 22 est situé dans ladite page mémoire.

Un autre avantage de l'invention est que la modification du pointeur dans le noeud père apparaît comme une opération atomique, c'est à dire qu'une seule opération valide la compression de la chaîne séquentielle propre à un noeud. Avant l'opération d'écriture du pointeur dans le noeud père, l'arbre courant est toujours valide, indépendamment de l'écriture du pointeur dans le noeud père. Un éventuel arrachement de la carte juste avant la modification du pointeur dans le noeud père laisse un arbre valide mais non mis à jour.

Afin d'améliorer la recherche dans l'index, une alternative possible est de chaîner les noeuds feuilles. Cela permet de parcourir les identifiants de façon séquentielle.
Une variante possible consiste à placer la mémoire 92 indexée en dehors de la carte. Dans ce cas, la carte stocke l'index 93 permettant d'accéder aux données de la mémoire 92 indexée.

## Revendications

1. Système de gestion d'un index de mémoire, ledit système comportant
- une mémoire de stockage indexée (92),
- une zone mémoire (94) qui contient l'index (93),
- un microprocesseur (91),
l'index (93) étant construit sous la forme d'une structure hiérarchique en arborescence (50), et comportant au moins deux noeuds (Fath, N2),
au moins un noeud (N2) contenant au moins un identifiant (61) et au moins un pointeur (62) référençant soit un noeud de l'index, soit une zone mémoire dans la mémoire de stockage (92),
**caractérisé en ce qu'**au moins un noeud (N2) a son contenu réparti sur un premier et un second espaces mémoires (10, 21), disjoints dans la zone de mémoire (94), le premier espace ayant un premier pointeur spécifique (63) qui pointe sur le second espace (21) et le second espace ayant un second pointeur spécifique (64) dont la valeur est à l'état vierge.

2. Système selon la revendication 1, **caractérisé en ce que** le second pointeur spécifique (64) est destiné à pointer sur une troisième espace mémoire (22).

3. Système selon les revendications 1 ou 2, **caractérisé en ce qu'**il s'agit d'un système journalisé.

4. Système selon l'une des revendications 1 à 3, **caractérisé en ce que** la mémoire de stockage indexée (92) et la zone mémoire (94) qui contient l'index sont réunis dans un unique circuit de mémoire.

5. Système selon l'une des revendications 1 à 3, **caractérisé en ce que** la zone mémoire (94) qui contient l'index (93) est située dans une mémoire distincte de la mémoire de stockage indexée (92).

6. Système selon la revendication 5, **caractérisé en ce que** la zone mémoire (94) qui contient l'index et la mémoire de stockage indexée (92) sont situées dans la même puce électronique ou sur des puces électroniques distinctes.

7. Système selon l'une des revendications 1 à 6, **caractérisé en ce que** la zone mémoire (94) qui contient l'index et la mémoire de stockage indexée (92) sont de nature non volatile.

8. Système selon la revendication 7, **caractérisé en ce que** la zone mémoire (94) qui contient l'index et la mémoire de stockage indexée (92) sont de type Flash.

9. Procédé de gestion d'un index de mémoire, ledit système comportant une mémoire de stockage indexée (92), une zone mémoire (94) qui contient l'index (93), un microprocesseur (91), l'index (93) étant construit sous la forme d'une structure hiérarchique en arborescence (50), et comportant au moins deux noeuds (Fath, N2), au moins un noeud (N2) contenant au moins un identifiant (61) et au moins un pointeur (62) référençant soit un noeud, soit une zone mémoire dans la mémoire de stockage (92),
au moins un noeud (N2) ayant son contenu réparti sur un premier et un second espaces mémoires (10, 21), disjoints dans la zone de mémoire (94), le premier espace ayant un premier pointeur spécifique qui pointe sur le second espace et le second espace ayant un second pointeur spécifique (64),
les espaces mémoire propres à un noeud (N2) formant une chaîne séquentielle d'espaces (10, 21), ladite chaîne possédant un espace mémoire initial (10) à une première extrémité et un espace mémoire terminal (21) à une seconde extrémité,
**caractérisé en ce que**, chaque espace (10, 21) disposant d'un pointeur spécifique (63, 64), l'espace terminal (21) contenant un pointeur spécifique (64) à l'état vierge, ladite chaîne séquentielle d'espaces est modifiée au fur et à mesure des mises à jour dudit noeud (N2) par positionnement du pointeur spécifique vierge (64) sur l'adresse d'un nouvel espace (22), le nouvel espace devenant l'espace terminal.

10. Procédé de modification d'un noeud (N2) selon la revendication 9, **caractérisé en ce que** la modification du noeud comprend :
- l'allocation d'un nouvel espace mémoire (22) terminal distinct dans la chaîne séquentielle d'espaces mémoires propre au noeud (N2),
- l'écriture de données dans le nouvel espace mémoire terminal (22) et,
- l'écriture, dans le précédent espace mémoire terminal (21) du pointeur vers le nouvel espace mémoire terminal (22).

11. Procédé selon la revendication 10, **caractérisé en ce que** l'étape d'écriture d'information de chaînage vers le nouvel espace mémoire terminal (22) est réalisée dans le pointeur spécifique (64) du précédent espace mémoire terminal (21).

12. Procédé de reconstruction du contenu d'un noeud (N2) selon la revendication 9, **caractérisé en ce que** le contenu d'un noeud est reconstruit sur la base du contenu de l'espace mémoire initial (10, 40) correspondant audit noeud (N2) auquel sont appliquées successivement, dans l'ordre du chaînage, les modifications stockées dans les espaces mémoires (21, 22) chaînés propres au noeud (N2).

13. Procédé selon la revendication 12, **caractérisé en ce que** les modifications appliquées au contenu de l'espace mémoire initial (10) comprennent des opérations de substitution et/ou de suppression et/ou d'addition.

14. Procédé de reconstruction du contenu d'un noeud selon la revendication 9, **caractérisé en ce que** le contenu d'un noeud est reconstruit sur la base du contenu de l'espace mémoire initial (10) correspondant audit noeud auquel sont appliquées, les modifications stockées dans l'espace mémoire terminal (22) de la chaîne d'espaces mémoire propre au noeud.

15. Procédé de compression d'un noeud (N2) selon la revendication 9, un pointeur d'adresse sur ledit noeud (N2) étant stocké dans un noeud père (Fath), **caractérisé en ce que**:
- le contenu du noeud (N2) est reconstruit à partir de la chaîne d'espaces mémoires (10, 21, 22) propre audit noeud, et
- le contenu dudit noeud est stocké dans un nouvel espace mémoire initial (40), et
- le noeud père (Fath) est modifié en modifiant le pointeur sur ledit noeud (N2) afin qu'il pointe sur l'adresse du nouvel espace mémoire initial (40) dudit noeud.

16. Procédé selon la revendication 15, **caractérisé en ce que** la compression du noeud est déclenchée dès que le nombre d'espaces mémoires de la chaîne d'espaces mémoires dudit noeud atteint un seuil prédéterminé.

17. Procédé selon la revendication 15, **caractérisé en ce que** la compression du noeud est déclenchée dès que la somme des tailles des espaces mémoires de la chaîne dudit noeud atteint un seuil prédéterminé.

18. Procédé selon la revendication 15, **caractérisé en ce que** la compression du noeud est déclenchée dès qu'au moins un espace mémoire appartenant à la chaîne dudit noeud est situé dans une page mémoire qui a été identifiée comme devant être effacée.
